# EUROPÄISCHE PATENTANMELDUNG

(11) **EP 2 668 989 A1**
(43) Veröffentlichungstag der Anmeldung: **04.12.2013**
(21) Anmeldenummer: 12170475.3
(22) Anmeldetag: 01.06.2012
(51) Int. Cl.: B01D 29/33, B01D 29/52, B01D 29/66, B01D 29/92, B01D 35/02, B01D 29/00

(54) **Filterkerze und Reinigungseinrichtung für die Anschwemmfiltration, Anschwemmkerzenfilter, Verwendung einer Filterkerze, Verfahren zum Auf- oder Nachrüsten einer Filteranlage, Verfahren zum Betreiben eines Anschwemmkerzenfilters, Verfahren zum Phasenwechsel**

(71) Anmelder: Filtrox Engineering AG, 9000 St. Gallen (CH)
(72) Erfinder: Zuber, Jürg, 9240 Uzwil (CH)
(74) Vertreter: Hepp Wenger Ryffel AG

(57) **Zusammenfassung**

Eine Filterkerze (1) für die Anschwemmfiltration, wobei die Filterkerze (1) für den hängenden Einbau vorgesehen ist, mit einem Endstück (8), zum Anschluss der Filterkerze (1) an eine Trennwand (28) eines Anschwemmkerzenfilters (20), einer Kerzenwand (5), welche zusammen mit einer angeschwemmten Anschwemmschicht (3) die aktive Filterschicht bildet und einem Abschlussstück (6) zur Abtrennung eines Kerzeninnenraumes (7) gegen einen Unfiltratraum (23). Dabei ist ein Tauchrohr (10) im Kerzeninnenraum (7) angeordnet, welches bei bestimmungsgemässem Gebrauch von ausserhalb des Endstücks (8) durch die Trennwand (18) und das Endstück (8) hindurch bis in einen unteren Endabschnitt des Kerzeninnenraumes (7) reicht und innerhalb des unteren Endabschnittes wenigstens eine Öffnung (15) im Tauchrohr (10) vorgesehen ist. Zwischen dem Tauchrohr (10) und dem Endstück (8) ist ein Spalt (16) ausgebildet.

## Beschreibung

Die vorliegende Erfindung betrifft eine Filterkerze sowie eine Reinigungseinrichtung für die Anschwemmfiltration, einen Anschwemmkerzenfilter, die Verwendung einer Filterkerze, ein Verfahren zum Auf- oder Nachrüsten einer Filteranlage, ein Verfahren zum Betreiben eines Anschwemmkerzenfilters sowie ein Verfahren zum Phasenwechsel gemäss den Oberbegriffen der unabhängigen Ansprüche.

Aus dem Stand der Technik sind verschiedene Filterkerzen für die Anschwemmfiltration sowie Anschwemmkerzenfilter bekannt.

Beispielsweise zeigt EP0203206A1 eine rückspülbare Filterkerze für die Anschwemmfiltration, welche ein Spaltrohr aufweist. Innerhalb eines Befestigungsrohres, mit welchem die Filterkerze in eine entsprechende Trennwand eines Anschwemmfilters eingebaut werden kann, ist ein Rohr angeordnet. Dieses Rohr dient einerseits dem Filtrataustrag aus der Filterkerze. Andererseits dient das Rohr auch der Rückspülung bzw. zum Abwerfen des Filterkuchen. Hierzu wird aus dem Filtratraum durch das Rohr eine Spülflüssigkeit in den Innenraum der Filterkerze eingelassen, so dass sich auf der Aussenseite der Filterkerze der dort anhaftende Filterkuchen löst. Zum vereinfachten Ablösen des Filterkuchens ist das Rohr auf seiner unteren Seite verschlossen und weist seitliche Öffnungen auf, welche die Spülflüssigkeit radial auf die Innenwand der Filterkerze lenken. Nachteilig ist, dass sich das Filtrat im Innenraum der Kerzen beim Leerdrücken mit einem gasförmigen Fluid nicht verdrängen lässt.

Dadurch lässt sich der Filterkuchen nicht vollständig trocknen resp. ausblasen, ein eingeblasenes Gas entweicht oben weg. Die in der Filterkerze verbleibende Flüssigkeitssäule vermag bei nicht anhaltendem Vorwärtsfluss der Gasströmung den Filterkuchen von der Kerze abzulösen, so dass gegebenenfalls nochmals neu angeschwemmt werden muss.

EP0155336A1 zeigt eine Filterkerze, welche mit einem Tauchrohr versehen ist. Dieses Tauchrohr ragt nahezu bis ans untere Ende der Filterkerze und soll gewährleisten, dass sich im Kerzeninnenraum keine Zone mit stehendem Medium bildet, wo sich allenfalls Trübstoffe ablagen können. Somit lässt sich zwar der Innenraum der Filterkerze über das Tauchrohr am Ende der Filtration durch Einblasen eines gasförmigen Fluids weitgehend entleeren. Beim nachträglichen Wiederauffüllen mit Produkt kann jedoch eine Luftblase, welche sich zwischen der Kerze und dem Tauchrohr angesammelt hat, nicht mehr entweichen, da die Kerze bereits mit einem Filterkuchen belegt ist. Dies ist besonders nachteilig, da das Filtrat so mit Luft bzw. Sauerstoff in Kontakt kommt, was eine Qualitätseinbusse zur Folge hat. Ausserdem erfolgt das Absprengen des Filterkuchens am Ende der Filtration üblicherweise über einen Wasserrückschlag. Damit dieser Rückschlag auf alle Kerzen und an allen Stellen der Kerzen gleichzeitig wirkt, dürfen die Filterkerzen keine Lufteinschlüsse aufweisen. Solche Lufteinschlüsse wirken dämpfend, so dass ein Wasserrückschlag den Kuchen lediglich im unteren Bereich der Filterkerzen ablöst.

Es ist Aufgabe der Erfindung, die Nachteile des Standes der Technik zu überwinden. Insbesondere soll eine Filterkerze zur Verfügung gestellt werden, welche nur eine geringe Restmenge von Filtrat zurückbehält und sich möglichst komplett entlüften lässt. Ausserdem soll ein Anschwemmkerzenfilter zur Verfügung gestellt werden, welcher bei einem Phasenwechsel, z.B. von Wasser auf Bier einen möglichst geringen Phasenverschnitt ermöglicht.

Diese Aufgabe wird durch die in den unabhängigen Patentansprüchen definierten Vorrichtungen und Verfahren gelöst. Weitere Ausführungsformen ergeben sich aus den abhängigen Patentansprüchen.

Eine erfindungsgemässe Filterkerze für die Anschwemmfiltration, wobei die Filterkerze für den hängenden Einbau vorgesehen ist, weist ein Endstück zum Anschluss der Filterkerze an eine Trennwand eines Anschwemmkerzenfilters auf. Das Endstück ist dabei rohrförmig oder ringförmig ausgestaltet und kann an ein Anschlussstück, welches in der Trennwand angeordnet ist, angeschlossen werden. Ausserdem weist die Filterkerze eine Kerzenwand mit einem Kerzeninnendurchmesser und einem Kerzenaussendurchmesser auf, wobei die Kerzenwand zusammen mit einer angeschwemmten Anschwemmschicht die aktive Filterschicht bildet. Des Weiteren weist die Filterkerze ein Abschlussstück zur Abtrennung eines Kerzeninnenraumes gegen einen Unfiltratraum auf. Im Kerzeninnenraum ist ein Tauchrohr angeordnet, welches bei bestimmungsgemässem Gebrauch von ausserhalb des Endstücks durch die Trennwand und das Endstück hindurch bis in einen unteren Endabschnitt des Kerzeninnenraumes reicht. Dabei wird unter einem unteren Endabschnitt des Kerzeninnenraumes derjenige Bereich verstanden, welcher sich ausgehend vom Abschlussstück innerhalb einer Distanz von kleiner oder gleich dem Kerzenaussendurchmesser befindet. Innerhalb dieses unteren Endabschnittes ist wenigstens eine Öffnung im Tauchrohr vorgesehen. Diese Öffnung ist vorzugsweise so gross, dass sie in etwa der Querschnittsfläche der Bohrung des Tauchrohres entspricht. Die Öffnung im Tauchrohr kann dabei am Ende des Tauchrohres ausgebildet sein. Alternativ sind auch eine oder mehrere Öffnungen in der Wandung im Endbereich des Tauchrohres denkbar. Zwischen dem Tauchrohr und dem Endstück ist ein Spalt ausgebildet. Dieser Spalt kann nun beispielsweise für die Entlüftung der Filterkerze oder für das Rückspülen verwendet werden. Es versteht sich von selbst, dass zwischen dem Tauchrohr und der Kerzenwand ebenfalls ein Spalt ausgebildet ist. Entsprechend ist der Aussendurchmesser des Tauchrohres kleiner dimensioniert als der Kerzeninnendurchmesser und kleiner als der Innendurchmesser des Endstücks und auch kleiner als der Innendurchmesser des Anschlussstücks. Die Innendurchmesser des Anschlussstücks und des Endstücks können dabei die gleiche Dimension aufweisen. Das Tauchrohr weist oberhalb des Endabschnittes vorzugsweise eine geschlossene Wandung auf.

Die Verwendung eines Tauchrohres hat den Vorteil, dass beim Leerdrücken bzw. Ausblasen eines Filters mittels eines gasförmigen Fluids sowohl die Flüssigkeit vom Filterkessel wie auch die Flüssigkeit im Filterkuchen weitgehend verdrängt wird. Entsprechend ist nach dem Ausblasen des Filters die Anschwemmschicht bzw. der Filterkuchen beinahe trocken und enthält nur noch einen geringen Flüssigkeitsanteil.

Durch den Spalt zwischen Endstück bzw. Anschlussstück und Tauchrohr wird ein Spülen des Kerzeninnenraumes ermöglicht, so dass zwingend das gesamte Volumen des Kerzeninnenraumes ausgetauscht oder gespült wird. Weiter wird durch den Spalt beim Befüllen eines Filters ermöglicht, dass auch die Filterkerze entlüftet werden kann. Ein Bilden von Lufteinschlüssen im Filterkerzeninnenraum kann somit verhindert werden. Ein Druckstoss, beispielsweise ein Wasserrückschlag, beim Rückspülen wird somit nicht durch eingeschlossene Luftblasen gedämpft, so dass ein sicheres Absprengen des Filterkuchens möglich wird.

Die Distanz vom Abschlussstück, innerhalb welcher sich der untere Endabschnitt des Kerzeninnenraumes befindet, kann kleiner als 80%, bevorzugt kleiner als 50%, besonders bevorzugt kleiner als 30% des Kerzenaussendurchmessers betragen.

Der Filterkerze kann ein Anschlussstück zum Anschliessen der Filterkerze an einer Trennwand eines Anschwemmkerzenfilters zugeordnet sein, wobei der Spalt bei bestimmungsgemässem Gebrauch der Filterkerze auch zwischen Tauchrohr und dem Anschlussstück ausgebildet ist. Wenn das Anschlussstück direkt der Filterkerze zugeordnet ist, wird die Montage der Filterkerze in einem Anschwemmkerzenfilter wesentlich vereinfacht. Dabei versteht es sich von selbst, dass das Anschlussstück derart ausgebildet sein muss, dass es in einer Trennwand eines Anschwemmkerzenfilters anordenbar ist und somit die feste Verbindung der Filterkerze mit der Trennwand ermöglicht.

Der Spalt zwischen Endstück bzw. Anschlussstück und Tauchrohr kann umlaufend um das Tauchrohr ausgebildet sein. Ein umlaufender Spalt gewährleistet ein gleichmässiges Entlüften bzw. Einfliessen eines Spülmediums. Dabei kann das Tauchrohr konzentrisch im Endstück bzw. im Anschlussstück und im Kerzeninnenraum angeordnet sein, so dass die Fliessbewegungen der entsprechenden Fluide noch gleichmässiger sind.

Der Spalt kann bei typischen Kerzenaussendurchmessern von 25 mm bis 32.5 mm eine Grösse zwischen 0.2 mm und 10.0 mm, vorzugsweise zwischen 0.5 mm und 5.0 mm, besonders bevorzugt zwischen 1.0 mm und 3.0 mm aufweisen. Der Spalt muss so gross bemessen sein, dass ein optimales Rückspülen ermöglicht wird und eine genügend grosse Menge an Rückspülmedium eingebracht werden kann, um den Filterkuchen ablösen zu können. Andererseits ist die Dimension des Spaltes durch den Innendurchmesser des Endstücks bzw. des Anschlussstückes und den Aussendurchmesser des Tauchrohres begrenzt. Das Endstück, das Anschlussstück und das Tauchrohr müssen aufgrund von Stabilität und/oder Fliessgeschwindigkeiten und/oder Druckbelastungen gewisse Mindestmasse, insbesondere bestimmte Mindestwandstärken aufweisen.

Das Tauchrohr kann auf seiner Aussenseite wenigstens einen durchmesservergrössernden Prallring aufweisen. Dieser Prallring bewirkt bei der Rückspülung durch den Spalt eine Ablenkung des Rückspülmediums zur Innenwand des Kerzeninnenraums, was insbesondere die Ablösung des Filterkuchens begünstigt.

Der Prallring kann einen Aussendurchmesser aufweisen, welcher mindestens 1.0 mm, vorzugsweise mindestens 2.0 mm, besonders bevorzugt mindestens 4.0 mm grösser ist als der Aussendurchmesser des Tauchrohres im Kerzeninnenraum. Je nach Ausgestaltung der Form des Durchmessersprunges und dessen Dimension kann der Effekt des einfacheren Ablösens des Filterkuchens begünstigt werden. Die Aussenfläche des Prallringes kann beispielsweise zylinderförmig mit scharfen Kanten ausgebildet sein, so dass der abrupte Durchmessersprung die Ablenkung des Rückspülmediums bewirkt. Die Aussenfläche kann jedoch auch mindestens teilweise kegelförmig mit gerader, konkaver oder konvexer Kegelfläche ausgestaltet sein, um die Ablenkung zu begünstigen. Strömungstechnisch sind auch andere Ausgestaltungen denkbar, beispielsweise die Form eines Torus mit kreisrundem oder elliptischem Querschnitt. Es ist jedoch zu beachten, dass für eine einfache Montage und/oder Austauschbarkeit des Tauchrohres der Prallring durch das Endstück und das Anschlussstück einschiebbar sein sollte.

Der Prallring kann derart am Tauchrohr angeordnet sein, dass er bei bestimmungsgemässem Gebrauch im Kerzeninnenraum in einem oberen Endbereich nahe am oberen Ende der Kerzenwand angeordnet ist. Dabei wird unter "nahe am oberen Ende" verstanden, dass sich der Prallring in einer Distanz zwischen 1.0 mm und 100 mm, bevorzugt zwischen 5.0 mm und 50 mm, besonders bevorzugt zwischen 10 und 20 mm ausgehend vom Austritt des Tauchrohres aus dem Endstück befindet. Durch die Anordnung des Prallrings im oberen Endbereich wird beim Rückspülen durch den Spalt das Spülmedium im oberen Endbereich zur Kerzenwand abgelenkt. Bei ausreichendem Druck der Spülflüssigkeit wird der Filterkuchen somit vorzugsweise im oberen Endbereich abgelöst. Durchbrechendes Spülmedium kann den Filterkuchen somit ausserhalb der Kerzenwand von oben nach unten abspülen.

Das Tauchrohr kann an seinem oberen Ende bei bestimmungsgemässem Gebrauch, z. B. bei einer Anschwemmfiltration mit Filterkerzen in hängendem Einbau, einen Kopf mit einem Befestigungsmittel zum Befestigen an einer Tauchrohrplatte eines Anschwemmkerzenfilters aufweisen. Eine solche Tauchrohrplatte kann beispielsweise in einem Abstand an eine Trennplatte zur Befestigung der Filterkerzen angeordnet sein. Dabei ist die Tauchrohrplatte auf der dem Unfiltratraum gegenüberliegenden Seite der Trennplatte angeordnet. Zwischen der Tauchrohrplatte und der Trennplatte wird so ein Spülraum ausgebildet. Als Befestigungsmittel kommen bekannte Befestigungsmittel wie beispielsweise ein Bajonettverschluss, ein Schraubverschluss, ein Presssitz, eine Schnappverbindung, usw. in Frage.

Das Befestigungsmittel kann ein Aussengewinde sein. Entsprechend muss die Tauchrohrplatte eine korrespondierende Öffnung mit einem Innengewinde aufweisen. Es hat sich gezeigt, dass solche Schraubverbindungen einfach zu warten und sehr zuverlässig sind. Ausserdem kann ein Dichtmittel, beispielsweise ein O-Ring, fein dosiert zwischen dem Kopf des Tauchrohres und der Tauchrohrplatte verpresst werden, so dass eine einwandfreie Dichtung gewährleistet wird. Es versteht sich von selbst, dass im Falle von Dichtungen entsprechende Aufnahmen und/oder Anschläge am Kopf oder an der Tauchrohrplatte vorgesehen sind.

Ein erfindungsgemässer Anschwemmkerzenfilter umfasst in bekannter Weise einen Filterkessel mit einer Trennwand, welche den Filterkessel in einen Unfiltratraum und in einen Filtratraum trennt. Eine Vielzahl von Filterkerzen, insbesondere wie vorgängig beschrieben, ist an der Trennwand befestigt und erstreckt sich von der Trennwand in den Unfiltratraum. Zwischen dem Filtratraum und der Trennwand ist eine Tauchrohrplatte angeordnet, an welcher die Tauchrohre befestigt sind. Die Tauchrohrplatte trennt ausserdem eine mit einem Kerzeninnenraum der Filterkerzen fluidisch verbundene Spülkammer vom Filtratraum ab. Die Spülkammer ist somit zwischen Trennwand und Tauchrohrplatte ausgebildet. Diese Spülkammer erlaubt beispielsweise ein Rückspülen der Filterkerze, ohne den Filtratraum ebenfalls mit Spülmedium zu befüllen. Unter einer Spülkammer wird jedes Volumen innerhalb des Filterkessels verstanden, welches bei bestimmungsgemässem Gebrauch des Anschwemmkerzenfilters durch die Filterkerzen vom Unfiltratraum abgetrennt ist und durch einen Kerzeninnenraum der Filterkerzen mit dem Filtratraum verbunden oder verbindbar ist. Die Spülkammer ist vorzugsweise im bestimmungsgemässen Gebrauch oberhalb der Filterkerzen angeordnet und so mit dem Kerzeninnenraum verbunden, dass dieser entlüftet werden kann.

Entsprechend kann die Spülkammer einen Anschluss zum Entlüften und/oder Spülen aufweisen. Über die Spülkammer und diesen Anschluss können die einzelnen Filterkerzen entlüftet werden, was insbesondere beim Befüllen vorteilhaft ist.

Ein weiterer Aspekt der vorliegenden Erfindung betrifft die Verwendung einer Filterkerze wie vorgängig geschildert, in einem Anschwemmkerzenfilter wie vorgängig beschrieben.

Ein erfindungsgemässes Verfahren zum Auf- oder Nachrüsten einer Filteranlage mit Anschwemmkerzenfilter umfasst die nachfolgenden Schritte in beliebiger Reihenfolge:
- Ersetzen herkömmlicher Filterkerzen mit Filterkerzen wie vorgängig beschrieben oder Nachrüsten herkömmlicher Filterkerzen mit je einem Tauchrohr, so dass sich Filterkerzen wie vorgängig beschrieben bilden,
- Aufbau einer Spülkammer, insbesondere mit einer Tauchrohrplatte anschliessend an eine herkömmliche Trennwand in mindestens einem Anschwemmkerzenfilter,
- Verbinden der Spülkammer mit dem Kerzeninnenraum, insbesondere durch Verbinden des Spaltes mit der Spülkammer,
- Verbinden der Tauchrohre der Filterkerzen mit dem Filtratraum.

Durch ein solches einfaches Verfahren kann eine bestehende Anlage mit herkömmlichen Anschwemmfiltern einfach modifiziert und mit den vorgängig beschriebenen erfindungsgemässen Filterkerzen oder Tauchrohren ausgerüstet werden. Eine so modifizierte Anlage erlaubt eine deutliche Reduzierung der Verschnittmengen während einer Vor- und Nachlaufabtrennung.

Dabei wird unter einer Vorlaufabtrennung die Phase nach dem Anbringen einer ersten Anschwemmschicht, beispielsweise mit Wasser, und anschliessender Zuführung des zu filtrierenden Produkts, beispielsweise Bier, bis zum Erreichen einer vorbestimmte Konzentration des Filtrates verstanden.

Unter einer Nachlaufabtrennung wird die Phase am Ende der Filtration verstanden, wenn das zu filtrierende Produkt, beispielsweise Bier, vor dem Austrag des Filterkuchens mit Hilfe eines anderen Mediums, beispielsweise mit CO₂ (Kohlendioxid) oder beim traditionellen Verfahren mit Wasser, verdrängt wird.

Ein erfindungsgemässes Verfahren zum Betreiben eines Anschwemmkerzenfilters wie vorgängig beschrieben, wobei der Filtratraum, der Unfiltratraum und die Spülkammer je über mindestens einen Anschluss zum Entlüften, Entleeren und/oder Befüllen verfügen, umfasst mindestens einen der nachfolgenden Schritte in beliebiger Reihenfolge und/oder Kombination:
- Befüllen des Anschwemmkerzenfilters mit Unfiltrat oder Wasser und Entlüften des Anschwemmkerzenfilters, wobei die Anschlüsse des Unfiltratraumes und der Spülkammer zwecks Entlüftung dauernd oder zumindest zeitweise offen sind,
- Entleeren des Anschwemmkerzenfilters, wobei der Anschluss der Spülkammer geschlossen ist und die Anschlüsse des Filtratraumes und des Unfiltratraumes offen sind, und wobei ein Gas durch den Anschluss des Unfiltratraumes in den Unfiltratraum eingeleitet wird,
- Trocknen und/oder Ausblasen des Filterkuchens und/oder Verdrängen eines Filtrats aus dem Kerzeninnenraum und/oder aus dem Filtratraum, wobei der Anschluss der Spülkammer geschlossen ist, und wobei bei vollständig oder teilweise entleertem Anschwemmkerzenfilter ein Gas durch den Anschluss des Unfiltratraumes in den Unfiltratraum eingeleitet wird, wobei das Gas durch den Filtratraum wieder austritt,

- Ausspülen der Kerzeninnenräume, wobei der Anschluss des Unfiltratraumes geschlossen und die Anschlüsse der Spülkammer und des Filtratraumes offen sind, und wobei ein Spülmedium durch den Anschluss der Spülkammer oder durch den Anschluss des Filtratraumes eingeleitet wird,
- Abwerfend des Filterkuchens, wobei die Anschlüsse des Filtratraumes und des Unfiltratraumes geschlossen sind und der Anschluss der Spülkammer sowie eine Öffnung im Unfiltratraum zum Trubaustrag offen sind, und wobei ein Spülmedium, beispielsweise Wasser, in die Spülkammer eingeleitet wird.

Zum Abwerfen des Filterkuchens kann auf das Spülmedium ein schlagartiger Druckanstieg aufgebracht werden. Dadurch, dass ein Druckanstieg schlagartigen erfolgt, wird das Ablösen des Filterkuchens begünstigt. Insbesondere beim Einleiten des Spülmediums durch den Spalt zwischen Endstück bzw. Anschlussstück und Tauchrohr wird durch den Prallring ein Ablösen des Filterkuchens weiter begünstigt.

Eine erfindungsgemässe Reinigungseinrichtung für ein Anschwemmkerzenfilter weist einen Wasseranschluss, eine oder mehrere Spritzdüsen zum Einbringen eines Reinigungsmittels in einen Unfiltratraum und einem Rohrsystem zum Verbinden der Spritzdüsen mit dem Wasseranschluss auf. Die Reinigungseinrichtung ist an einer Trennplatte zum Abtrennen des Unfiltratraumes von einem Filtratraum angebracht oder anbringbar. Dabei ist die Spritzdüse derart ausgestaltet, dass durch die Spritzdüse ein Fluid aus einem Unfiltratraum eines Anschwemmkerzenfilters abziehbar ist. Es versteht sich von selbst, dass der Wasseranschluss nicht auf das Anschliessen von Wasser beschränkt ist sondern jegliche Arten von Reinigungsfluiden über diesen Wasseranschluss in den Unfiltratraum eingebracht werden können. Die eine oder mehrere Spritzdüsen sind vorzugsweise derart an der Trennplatte angeordnet, dass diese den gesamten Unfiltratraum gleichmässig ausspritzen können und insbesondere Überreste von abgeworfenen Filterkuchen von den Filterkerzen abwaschen können. Hierzu sind die Reinigungsvorrichtung und die Spritzdüsen bei bestimmungsgemässem Gebrauch im oberen Ende des Unfiltratraumes angeordnet und an der Trennplatte befestigt. Da durch die Spritzdüse nicht nur ein Reinigungsmittel eingebracht sondern auch ein Fluid aus dem Unfiltratraum abgezogen werden kann, lässt sich ein Phasenwechsel im Unfiltratraum sehr einfach und effizient durchführen. So kann eine alte Phase möglichst verwirbelungsfrei aus dem Unfiltratraum abgezogen werden, ohne die Filterkerzen zu belasten. Ein Vermischen der alten mit einer neuen Phase im Unfiltratraum kann reduziert oder gänzlich verhindert werden. Ausserdem wird durch die Vielzahl der Spritzdüsen, durch welche das Fluid abgezogen wird, keine übermässige Strömung aufgebaut, so dass die Filterkuchen der einzelnen Kerzenfilter nicht beeinträchtigt werden.

Die Spritzdüse kann ein Prallblech zum gleichmässigen Verteilen eines einströmenden Reinigungsmittels im Unfiltratraum aufweisen. Ein solches Prallblech ermöglicht auf einfache Art, das durch die Spritzdüse eingespritze Reinigungsmittel in alle Richtungen zu verteilen. Wenn das Prallblech konkav ausgebildet ist, wird ein auftreffender Strahl sogar bis an die Trennplatte umgelenkt und kann auch diese noch reinigen. Ein solches Prallblech kann mit einem Abstandshalter vor der Mündung der Spritzdüse befestigt werden.

Die Spritzdüse kann derart ausgestaltet sein, dass ein Strömungswiderstand in Richtung zum Unfiltratraum grösser ist als ein Strömungswiderstand beim Abziehen eines Fluids aus dem Unfiltratraum. Somit kann beim Reinigen ein Reinigungsmittel mit einem hohen Druck in den Unfiltratraum eingespritzt werden, während das Abziehen eines Fluids aus dem Unfiltratraum ohne wesentlichen Druckverlust erfolgt.

Die Spritzdüse kann zur Erhöhung des Einspritzdruckes in Richtung zum Unfiltratraum ein Rückschlagventil aufweisen, welches das Einbringen z.B. eines Reinigungsmittels in den Unfiltratraum behindert. Dieses Rückschlagventil kann mittels mindestens einer Bypassöffnung durchlässig sein. Mit der Anzahl, Grösse und Ausgestaltung der Bypassöffnungen kann sowohl der Druck als auch die Strahlform für das Einspritzen beeinflusst werden. Beispielsweise kann ein Rückschlagventil eine Kugel innerhalb einer Ventilkammer aufnehmen. Eine solche Kugel wird in Richtung zum Unfiltratraum durch den Fluss des Reinigungsmittels in einen Ventilsitz gepresst und verschliesst somit eine Mündung zum Unfiltratraum. Als Bypassöffnung ist mindestens eine Bohrung denkbar, welche neben dem Ventilsitz in die Ventilkammer mündet.

Ein erfindungsgemässer Anschwemmkerzenfilter, insbesondere wie vorgängig beschrieben, mit einem Unfiltratraum, einem Filtratraum und einer Trennwand, umfasst eine Reinigungseinrichtung wie vorgängig geschildert. Dabei ist die Reinigungseinrichtung im Unfiltratraum an der Trennplatte angeordnet. Ein solcher Anschwemmkerzenfilter erlaubt die Verwendung der Reinigungseinrichtung sowohl zur Reinigung als auch zum Abziehen von Unfiltrat aus dem Unfiltratraum.

Bei einem erfindungsgemässen Verfahren zum Phasenwechsel in einem Anschwemmkerzenfilter mit Filterkerzen, insbesondere in einem Anschwemmkerzenfilter wie vorgängig geschildert, wobei in den Unfiltratraum eine nächste Phase eingeleitet wird, wird bis zum Erreichen einer vordefinierten Phasenkonzentration im Filtrat lediglich ein Teil der Phase durch die Filterkerzen und ein Teil der Phase direkt aus dem Unfiltratraum durch eine Reinigungseinrichtung und/oder durch einen Entlüftungsanschluss des Unfiltratraumes abgezogen. Die Reinigungseinrichtung kann dabei wie vorgängig geschildert ausgestaltet sein. Ein Phasenwechsel ist beispielsweise beim Anschwemmen der Filterkerzen und anschliessender Filtration nötig. So kann beispielsweise ein Filterhilfsmittel, z.B. Kieselgur, mittels Wasser angeschwemmt werden. Sobald die Filterkerze einen genügend grossen Filterkuchen aufgebaut hat erfolgt ein Phasenwechsel, beispielsweise zu Bier. Solange noch Wasser im Unfiltratraum und in den Filterkerzen vorhanden ist, wird das zu filtrierende Bier mit diesem Wasser vermischt. Diese Mischphase kann nicht als Bier weiterverwendet werden und stellt einen eigentlichen Verlust dar. Dadurch, dass beim Phasenwechsel jetzt nur ein kleiner Teil durch die Filterkerzen, während der grössere Teil direkt aus dem Unfiltratraum abgezogen wird, erfolgt nur eine sehr kleine Mischphase, welche nicht verwendet werden kann. Wenn beim Abziehen der Phase direkt aus dem Unfiltratraum Verwirbelungen vermieden werden, kann die Trennung zwischen Wasser und Bier relativ einfach erfolgen, so dass auch hier der Bierverlust klein gehalten werden kann.

Zwischen 50% und 99%, vorzugsweise zwischen 65% und 95%, besonders bevorzugt zwischen 80% und 90% der Phase kann direkt aus dem Unfiltratraum abgezogen werden. Entsprechend wird zwischen 1% und 50%, bevorzugt zwischen 5% und 35%, besonders bevorzugt zwischen 10% und 20% der Phase durch die Filterkerzen abgezogen. Hierbei handelt es sich um Verhältnisse, welche vorzugsweise durch entsprechende Rohrquerschnitte voreingestellt sind, so dass auf die Verwendung von Ventilen gänzlich verzichtet werden kann. Es hat sich gezeigt, dass eine gewisser Fluss durch die Filterkerzen nötig ist, um den Filterkuchen stabil auf der Filterkerze zu halten. Bei zu geringem Anteil durch die Filterkerzen kann sich der Filterkuchen lösen so dass erneut angeschwemmt werden muss.

Anhand von Figuren, welche lediglich Ausführungsbeispiele darstellen, wird die Erfindung im Folgenden näher erläutert. Es zeigen:
- Figur 1:: einen Ausschnitt eines erfindungsgemässen Anschwemmkerzenfilters,
- Figur 2:: eine erfindungsgemässe Filterkerze,
- Figur 3:: eine Detailzeichnung eines Tauchrohres,
- Figur 4a:: eine Darstellung der Fliessrichtungen eines Mediums im Anschwemmkerzenfilter gemäss Figur 1 beim Befüllen,
- Figur 4b:: eine Darstellung der Fliessrichtungen eines Mediums im Anschwemmkerzenfilter gemäss Figur 1 beim Filtrieren,
- Figur 4c:: eine Darstellung der Fliessrichtungen eines Mediums im Anschwemmkerzenfilter gemäss Figur 1 beim Entleeren,
- Figur 4d:: eine Darstellung der Fliessrichtungen eines Mediums im Anschwemmkerzenfilter gemäss Figur 1 beim Abwerfen eines Filterkuchens,
- Figur 5a:: eine Spritzdüse zum Ausspülen des Unfitratraumes,
- Figur 5b:: eine alternative Spritzdüse zum Ausspülen des Unfiltratraumes, und
- Figur 6:: eine Ansicht aus dem Unfiltratraum auf eine Trennwand eines Anschwemmkerzenfilters.

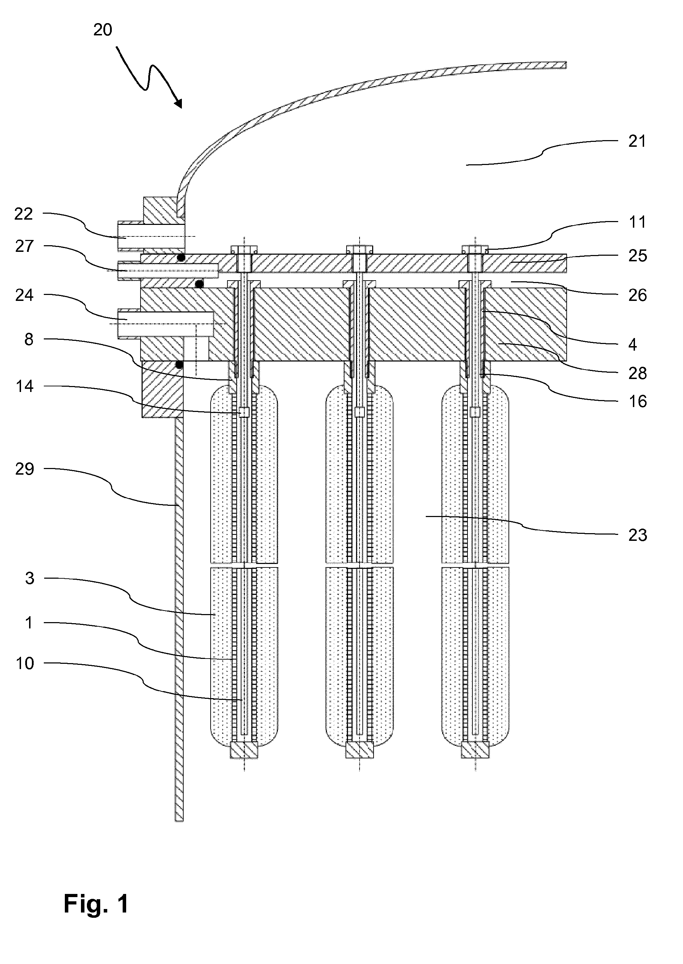

Figur 1 zeigt einen Ausschnitt aus einem Anschwemmkerzenfilter 20. Der Anschwemmkerzenfilter 20 besteht im Wesentlichen aus einem Filterkessel 29, welcher eine Hülle des Anschwemmkerzenfilters 20 bildet. Eine Trennwand 28 trennt einen Unfiltratraum 23 von einem Filtratraum 21. Zusätzlich zu dieser herkömmlichen Trennwand 28 ist noch eine Tauchrohrplatte 25 so vorgesehen, dass ein zusätzlicher Raum, nämlich eine Spülkammer 26, abgetrennt wird. Jeder einzelne Raum, Filtratraum 21, Unfiltratraum 23 und Spülkammer 26 ist mit einem Anschluss 22, 24, 27 zum Entlüften, Entleeren und/oder Befüllen versehen. In der Trennwand 28 sind in üblicher Weise die Filterkerzen 1 je mit einem Anschlussstück 4 fixiert. Das Anschlussstück 4 ist dabei als Rohr ausgebildet, welches in der Trennwand 28 eingesetzt und mit einem oberen Endstück 8 der Filterkerze 1 verbunden werden kann. Das Anschlussstück 4 kann auch einstückig mit der Trennwand 28 ausgebildet sein. Durch dieses Anschlussstück 4 und das Endstück 8 führt je ein Tauchrohr 10, welches an der Tauchrohrplatte 25 befestigt ist, bis in die unterste Stelle der Filterkerze 1. Das Tauchrohr 10 weist an seinem oberen Ende einen Kopf 11 auf, mittels welchem das Tauchrohr 10 in der Tauchrohrplatte 25 befestigt ist. Zwischen dem Tauchrohr 10 und dem Endstück 8 bzw. dem Anschlussstück 4 ist ein Spalt 16 vorhanden, welcher beispielsweise für eine Rückspülung oder zur Entlüftung der Filterkerze 1 verwendet werden kann. Das Tauchrohr 10 weist weiter einen Prallring 14 auf, welcher im Falle der Rückspülung ein Spülmedium zur Innenwand der Filterkerze 1 ablenkt und entsprechend einen aufgebauten Filterkuchen 3 löst.

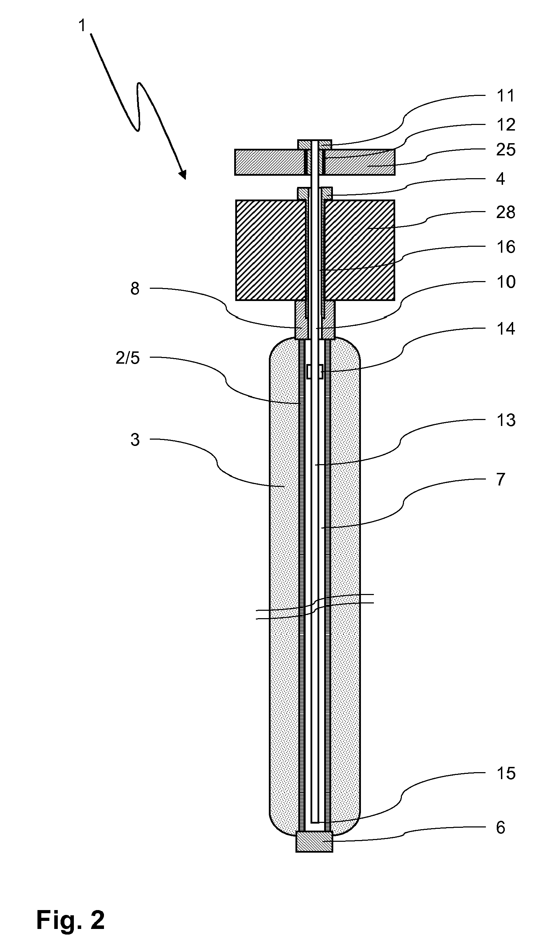

In Figur 2 ist eine erfindungsgemässe Filterkerze 1 dargestellt. Die Filterkerze 1 besteht im Wesentlichen aus einer Kerzenwand 5, welche in der dargestellten Filterkerze ein Spaltrohr 2 ist. Diese Kerzenwand 5 ist an ihrer Unterseite mit einem Abschlussstück 6 verschlossen, so dass kein Unfiltrat in den Kerzeninnenraum 7 eindringen kann, sondern nur durch die Anschwemmschicht 3 und die Kerzenwand 5 eindringen kann. Am gegenüberliegenden Ende ist ein rohrförmiges oder ringförmiges Endstück 8 angebracht, mittels welchem die Filterkerze 1 an einem Anschlussstück 4 in einer Trennwand 28 eines Anschwemmkerzenfilters 20 (siehe Figur 1) befestigt werden kann und eine Durchführung zu einer über der Trennwand 28 liegenden Kammer bildet. Der Innendurchmesser des Anschlussstücks 4 ist dabei vorzugsweise gleich gross dimensioniert wie der Innendurchmesser des Endstücks 8. Des Weiteren verfügt die Filterkerze 1 über ein Tauchrohr 10, welches von ausserhalb des Anschlussstücks 4 durch das Anschlussstück 4 und durch das Endstück 8 hindurch in den Kerzeninnenraum 7 hineinragt und eine Öffnung 15 im unteren Bereich der Filterkerze 1, das heisst nahe beim Abschlussstück 6 aufweist. Oberhalb dieser Öffnung 15 weist das Tauchrohr eine geschlossene Wandung auf. Das Tauchrohr 10 weist über seine gesamte Länge eine durchgehende Bohrung 13 auf. Das Tauchrohr 10 ist dabei so dimensioniert, dass zwischen dem Tauchrohr 10 und dem Anschlussstück 4 bzw. dem Endstück 8 ein Spalt 16 umlaufend ausgebildet ist. Das Tauchrohr 10 weist an dem der Öffnung 15 gegenüberliegenden Ende einen Kopf 11 auf, welcher über ein Aussengewinde 12 verfügt. Mit diesem Aussengewinde 12 kann das Tauchrohr 10 in eine mit einem korrespondierenden Innengewinde versehenen Tauchrohrplatte 25 eines Anschwemmkerzenfilters 20 (siehe Figur 1) eingeschraubt werden. Zwischen dem Tauchrohr 10 und der Kerzenwand 5 ist ebenfalls ein Spalt ausgebildet.

Wenn nun die Filterkerze 1 gereinigt bzw. rückgespült werden soll, so kann der Raum zwischen der Tauchrohrplatte 25 und der Trennwand 28 mit einem Spülmedium gefüllt werden. Das Spülmedium wird durch den Spalt 16 zwischen dem Tauchrohr 10 und dem Endstück 8 bzw. Anschlussstück 4 in den Kerzeninnenraum 7 einfliessen. Am Tauchrohr 10 bewirkt ein Prallring 14, welcher lokal den Aussendurchmesser des Tauchrohres vergrössert, ein Umlenken des Spülmediums, so dass dieses gegen die Innenseite der Kerzenwand 5 gelenkt wird. Bei genügend grossem Druck des Spülmediums wird somit ein Filterkuchen 3, welcher sich auf der Aussenseite der Kerzenwand 5 während der Filtration gebildet hat, abgelöst. Dadurch, dass der Prallring 14 in einem Abstand von ca. 20 mm auf das Anschlussstück 4 bzw. das Endstück 8 folgt, wird in diesem Bereich das Spülmedium radial nach aussen gelenkt, so dass sich der Filterkuchen 3 an seinem obersten Ende löst. Ein flüssiges Spülmedium wird entsprechend durch die somit freigewordene Öffnung im Spaltrohr 2 aus der Filterkerze 1 austreten und den Filterkuchen 3 auch von aussen vom Spaltrohr 2 abspülen.

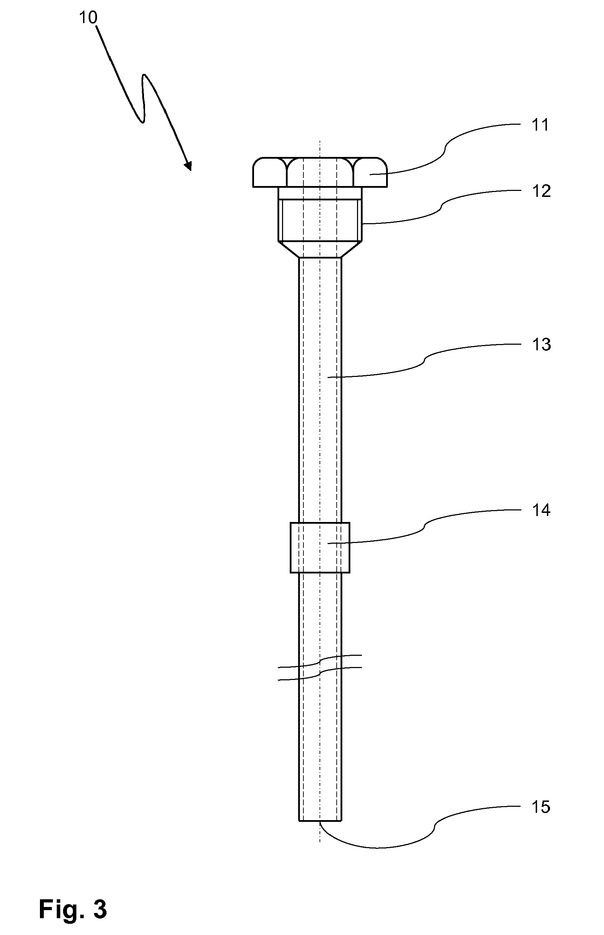

Figur 3 zeigt eine Detailzeichnung eines Tauchrohres 10. Wie bereits erwähnt besteht das Tauchrohr 10 im Wesentlichen aus einem Rohr mit durchgehender Bohrung 13. An seinem in der Darstellung unteren Ende weist das Rohr eine Öffnung 15 auf. Das der Öffnung 15 gegenüberliegende Ende des Tauchrohres 10 ist mit einem Kopf 11 versehen. Dieser Kopf 11 weist einerseits ein Gewinde 12 auf, welches das Befestigen in einer Tauchrohrplatte 25 (siehe Figuren 1 und 2) erlaubt. Ausserdem weist der Kopf 11 einen Aussensechskant auf, welcher das Einschrauben mit einem geeigneten Werkzeug erlaubt. Der Kopf 11 des Tauchrohres 10 kann auch anders ausgebildet sein und insbesondere andere Befestigungsmittel aufweisen. Der Aussendurchmesser des Tauchrohres 10 wird durch einen Prallring 14 lokal vergrössert. Dieser Prallring ist dabei so angeordnet, dass er sich bei bestimmungsgemäss eingebautem Tauchrohr 10 im Kerzeninnenraum 7 unmittelbar unter dem Anschlussstück 4 bzw. dem Endstück 8 (siehe Figur 2) befindet. Der Prallring 14 kann beispielsweise ein zylinderförmiger Ring sein, welcher auf das Tauchrohr 10 aufgeschoben und beispielsweise angelötet oder angeschweisst wird. Selbstverständlich sind auch andere Herstellungsformen denkbar. Das Tauchrohr 10 kann einstückig ausgestaltet oder aus mehreren Teilen, z. B. aus einem Rohr und dem Kopf 11 zusammengesetzt sein. Das Tauchrohr 10 besteht vorzugsweise aus Edelstahl. Es sind jedoch auch andere Materialen denkbar, beispielsweise Kunststoff.

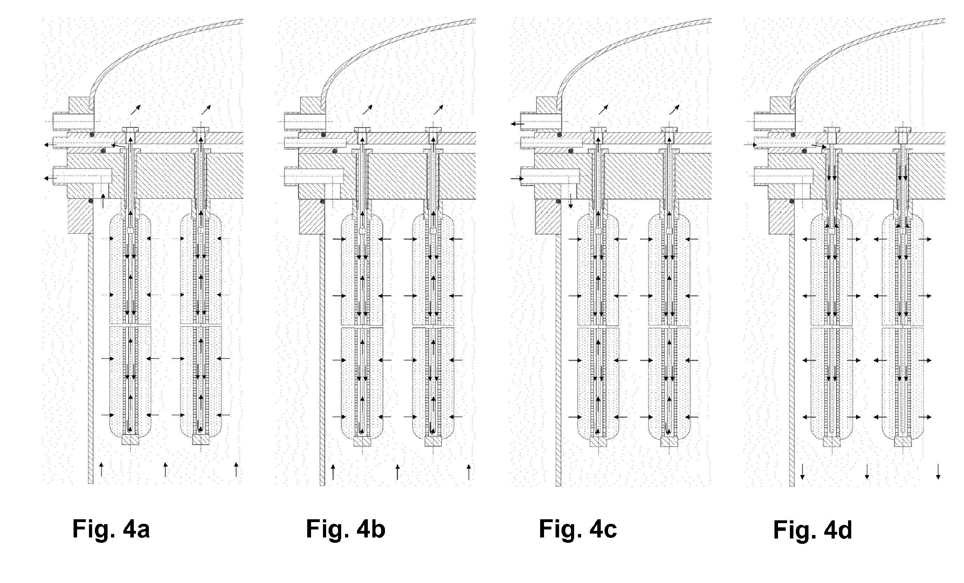

In den Figuren 4a bis 4d sind die Fliessrichtungen unterschiedlicher Medien in einem Anschwemmfilter in verschiedenen Benutzungszuständen durch Pfeile dargestellt. Dabei zeigt Figur 4a die Situation beim Befüllen und Entlüften, Figur 4b beim Filtrieren, Figur 4c beim Entleeren und Trocknen/Ausblasen des Filterkuchens und Verdrängen von Filtrat und Figur 4d beim Abwerfen des Filterkuchens.

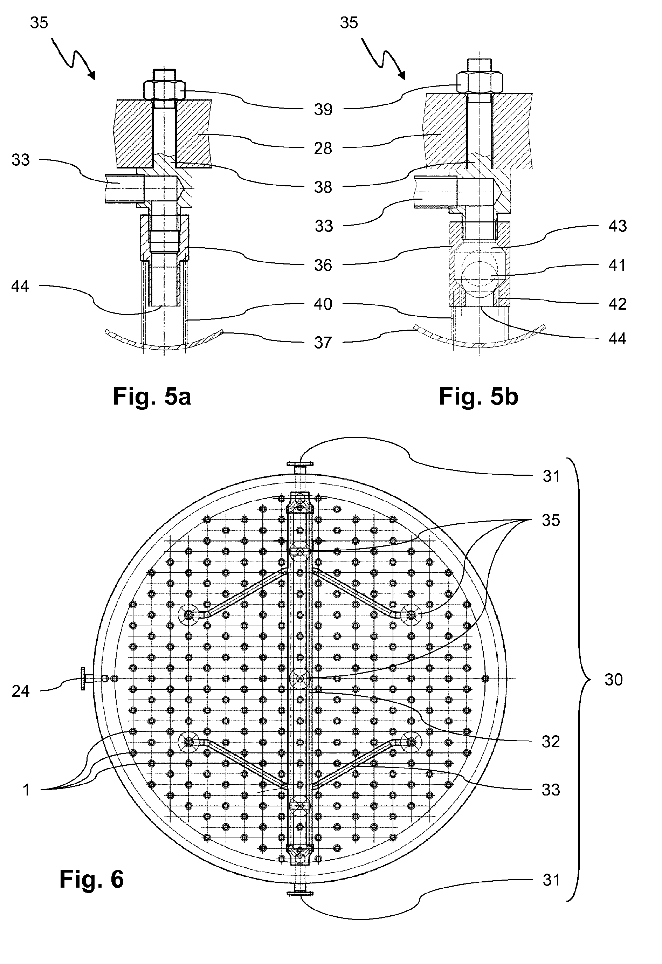

Figur 5a zeigt eine erste Ausführungsform einer Spritzdüse 35 zum Ausspülen des Unfitratraumes 23 (siehe Figur 1). Die Spritzdüse 35 weist eine Befestigungsschraube 38 auf, mittels welcher die Spritzdüse 35 an einer Trennwand 28 eines Anschwemmkerzenfilters befestigt werden kann. Hierzu weist die Trennwand 28 beispielsweise eine Bohrung auf, welche die Befestigungsschraube 38 aufnimmt und an deren Ende die Befestigungsschraube 38 mit einer Befestigungsmutter 39 fixiert werden kann. Weiter weist die Spritzdüse 35 eine Spritzkammer 36 auf, welche von einer Leitung 33 mit Reinigungsmittel versorgt werden kann. Eine Mündung 44 der Spritzdüse 35 ist auf ein Prallblech 37 gerichtet, welches mit einem Abstandhalter 40 am Spritzkopf 36 befestigt ist. Das Prallblech 37 ist konkav ausgestaltet. Ein Reinigungsmittelstrahl wird somit vom Prallblech 37 umgelenkt und allseitig im Unfiltratraum verteilt. Durch die konkave Form des Prallblechs 37 wird das Reinigungsmittel sogar bis zur Trennwand 28 umgelenkt.

In Figur 5b ist eine alternative Ausführungsform einer Spritzdüse 35 zum Ausspülen des Unfiltratraumes 23 (siehe Figur 1) dargestellt. Die Spritzdüse 35 ist im Wesentlichen identisch zur Spritzdüse gemäss Figur 5a, der Spritzkopf 36 weist jedoch ein Rückschlagventil mit einer Ventilkugel 41 und mehreren Bypassbohrungen 42 auf. Die Ventilkugel 41 verschliesst beim Einspritzen einer Reinigungsflüssigkeit die Mündung 44 der Ventilkammer 43. Neben dieser Mündung 44 sind jedoch Bypassbohrungen 42 angeordnet, welche insgesamt einen kleineren Querschnitt als die Mündung 44 aufweisen und somit einen erhöhten Spritzdruck erlauben. Wenn die Spritzdüse 35 zum Abziehen eines Fluids aus dem Unfiltratraum verwendet wird, gibt die Ventilkugel 41 die Mündung 44 frei, so dass möglichst ohne Druckverlust das Fluid aus dem Unfiltratraum abgezogen werden kann.

Figur 6 zeigt eine Ansicht aus dem Unfiltratraum 23 auf eine Trennwand 28 (beides siehe Figur 1) eines Anschwemmkerzenfilters. Zu erkennen ist die Reinigungseinrichtung 30 umfassend ein Rohrsystem mit Wasseranschluss 31, Verteilrohr 32, Leitungen 33 und Spritzdüsen 35. Ein Reinigungsmittel wird über die beiden Wasseranschlüsse 31 eingeleitet und auf die beiden Verteilrohre 32 verteilt. Von den Verteilrohren 32 zweigen Leitungen 33 zu den einzelnen Spritzdüsen 35 ab, welche das Reinigungsmittel gleichmässig in den Unfiltratraum einspritzen. Weiter zu erkennen ist ein Anschluss 24 des Unfiltratraumes, welche beispielsweise zum Entlüften des Unfiltratraumes verwendet werden kann. Ebenfalls dargestellt sind die Filterkerzen 1, welche in einem reglässigen Muster angeordnet sind. Die Spritzdüsen 35 sind dabei jeweils anstelle einer Filterkerze 1 angeordnet um eine optimale Verteilung des Reinigungsmittels zu gewährleisten. Alternativ können die Spritzdüsen 35 auch zwischen den Filterkerzen 1 angeordnet sein.

## Patentansprüche

1. Filterkerze (1) für die Anschwemmfiltration, wobei die Filterkerze (1) für den hängenden Einbau vorgesehen ist, mit einem Endstück (8) zum Anschluss der Filterkerze (1) an eine Trennwand (28) eines Anschwemmkerzenfilters (20), vorzugsweise an ein in der Trennwand (28) angeordnetes Anschlussstück (4), einer Kerzenwand (5), welche zusammen mit einer angeschwemmten Anschwemmschicht (3) die aktive Filterschicht bildet und einem Abschlussstück (6) zur Abtrennung eines Kerzeninnenraumes (7) gegen einen Unfiltratraum (23), wobei ein Tauchrohr (10) im Kerzeninnenraum (7) angeordnet ist, welches bei bestimmungsgemässem Gebrauch von ausserhalb des Endstücks (8) durch die Trennwand (28) und das Endstück (8) hindurch bis in einen unteren Endabschnitt des Kerzeninnenraumes (7) reicht, wobei innerhalb des unteren Endabschnittes wenigstens eine Öffnung (15) im Tauchrohr vorgesehen ist, **dadurch gekennzeichnet, dass** zwischen dem Tauchrohr (10) und dem Endstück (8) ein Spalt (16) ausgebildet ist.

2. Filterkerze (1) nach Anspruch 1, **dadurch gekennzeichnet, dass** der Filterkerze (1) ein Anschlussstück (4) zugeordnet ist, wobei der Spalt (16) auch zwischen dem Tauchrohr (10) und dem Anschlussstück (4) ausgebildet ist.

3. Filterkerze (1) nach Anspruch 1 oder 2, **dadurch gekennzeichnet, dass** der Spalt (16) umlaufend um das Tauchrohr (10) ausgebildet ist.

4. Filterkerze (1) nach einem der Ansprüche 1 bis 3, **dadurch gekennzeichnet, dass** der Spalt (16) eine Grösse zwischen 0.2 mm und 10.0 mm, vorzugsweise zwischen 0.5 mm und 5.0 mm, besonders bevorzugt zwischen 1.0 mm und 3.0 mm aufweist.

5. Filterkerze (1) nach einem der Ansprüche 1 bis 4, **dadurch gekennzeichnet, dass** das Tauchrohr (10) auf seiner Aussenseite einen durchmesservergrössernden Prallring (14) aufweist.

6. Filterkerze (1) nach Anspruch 5, **dadurch gekennzeichnet, dass** der Prallring (14) einen Aussendurchmesser aufweist, welcher mindestens 1.0 mm, vorzugsweise mindestens 2.0 mm, besonders bevorzugt mindestens 4.0 mm grösser ist als ein Aussendurchmesser des Tauchrohres (10).

7. Filterkerze (1) nach Anspruch 5 oder 6, **dadurch gekennzeichnet, dass** der Prallring (14) derart am Tauchrohr (10) angeordnet ist, dass er im Kerzeninnenraum (7) nahe am oberen Ende der Kerzenwand (5) angeordnet ist.

8. Filterkerze nach einem der Ansprüche 1 bis 7, **dadurch gekennzeichnet, dass** das Tauchrohr (10) an seinem oberen Ende einen Kopf (11) mit einem Befestigungsmittel zum Befestigen an einer Tauchrohrplatte (25) eines Anschwemmkerzenfilters (20) aufweist.

9. Filterkerze nach Anspruch 8, **dadurch gekennzeichnet, dass** das Befestigungsmittel ein Aussengewinde (12) ist.

10. Anschwemmkerzenfilter (20) mit einem Filterkessel (29) mit einer Trennwand (28), welche den Filterkessel (23) in einen Unfiltratraum (23) und in einen Filtratraum (21) trennt und mit einer Vielzahl von an der Trennwand (28) befestigten Filterkerzen (1), insbesondere gemäss einem der Ansprüche 1 bis 9, welche sich von der Trennwand (28) in den Unfiltratraum (23) erstrecken, **dadurch gekennzeichnet, dass** zwischen Filtratraum (21) und Trennwand (28) eine Tauchrohrplatte (25) angeordnet ist, an der die Tauchrohre (10) befestigt sind und welche eine mit einem Kerzeninnenraum (7) der Filterkerzen (1) fluidisch verbundene Spülkammer (26) vom Filtratraum (21) abtrennt.

11. Anschwemmkerzenfilter (20) nach Anspruch 10, **dadurch gekennzeichnet, dass** die Spülkammer (26) einen Anschluss (27) zum Entlüften und/oder Spülen aufweist.

12. Verwendung einer Filterkerze (1) nach einem der Ansprüche 1 bis 9 in einem Anschwemmkerzenfilter nach einem der Ansprüche 10 bis 11.

13. Verfahren zum Auf- oder Nachrüsten einer Filteranlage mit Anschwemmkerzenfilter umfassend die nachfolgenden Schritte in beliebiger Reihenfolge:
- Ersetzen herkömmlicher Filterkerzen mit Filterkerzen (1) gemäss einem der Ansprüche 1 bis 9, oder Nachrüsten herkömmlicher Filterkerzen mit je einem Tauchrohr (10), so dass sich Filterkerzen (1) gemäss einem der Ansprüche 1 bis 9 bilden,
- Aufbau einer Spülkammer (26), insbesondere mit einer Tauchrohrplatte (25) anschliessend an eine herkömmliche Trennwand (28),
- Verbinden der Spülkammer (26) mit dem Kerzeninnenraum (7), insbesondere durch Verbinden des Spaltes (16) mit der Spülkammer (26),
- Verbinden der Tauchrohre (10) der Filterkerzen (1) mit dem Filtratraum (21).

14. Verfahren zum Betreiben eines Anschwemmkerzenfilters (20) nach einem der Ansprüche 10 bis 11, wobei der Filtratraum (21), der Unfiltratraum (23) und die Spülkammer (26) je über mindestens einen Anschluss (22, 24, 27) zum Entlüften, Entleeren und/oder Befüllen verfügen, umfassend einen oder mehrere der nachfolgenden Schritte in beliebiger Reihenfolge und/oder Kombination:
- Befüllen des Anschwemmkerzenfilters (20) mit Unfiltrat oder Wasser und Entlüften des Anschwemmkerzenfilters (20), wobei der Anschluss (24) des Unfiltratraumes (23) und der Anschluss (27) der Spülkammer (26) zwecks Entlüftung dauernd oder zumindest zeitweise offen sind,
- Entleeren des Anschwemmkerzenfilters (20), wobei der Anschluss (27) der Spülkammer (26) geschlossen ist und die Anschlüsse (22, 24) des Filtratraumes (21) und des Unfiltratraumes (23) offen sind, und wobei ein Gas in den Unfiltratraum (23) eingeleitet wird,
- Trocknen und/oder Ausblasen des Filterkuchens (3) und/oder Verdrängen eines Filtrats aus dem Kerzeninnenraum (7) und/oder aus dem Filtratraum (21), wobei der Anschluss (27) der Spülkammer (26) geschlossen ist, und wobei bei vollständig oder teilweise entleertem Anschwemmkerzenfilter (20) ein Gas durch den Anschluss (24) des Unfiltratraumes (24) in den Unfiltratraum (23) eingeleitet wird, wobei das Gas durch den Filtratraum (21) wieder austritt,
- Ausspülen der Kerzeninnenräume (7), wobei der Anschluss (24) des Unfiltratraumes (23) geschlossen ist und die Anschlüsse (27, 24) der Spülkammer (26) und des Filtratraumes (21) offen sind, und wobei ein Spülmedium durch den Anschluss (27) der Spülkammer (26) oder durch den Anschluss (24) des Filtratraumes (21) eingeleitet wird,
- Abwerfen des Filterkuchens (3), wobei die Anschlüsse (22, 24) des Filtratraumes (21) und des Unfiltratraumes (23) geschlossen sind und der Anschluss (27) der Spülkammer (26) sowie eine Öffnung im Unfiltratraum (23) zum Trubaustrag offen ist, und wobei ein Spülmedium in die Spülkammer (26) eingeleitet wird.

15. Reinigungseinrichtung (30) für ein Anschwemmkerzenfilter (20) mit einem Wasseranschluss (31), einer oder mehreren Spritzdüsen (35) zum Einbringen eines Reinigungsmittels in einen Unfiltratraum (23) und einem Rohrsystem zum Verbinden der Spritzdüsen (35) mit dem Wasseranschluss (31), wobei die Reinigungseinrichtung an einer Trennplatte (28) zum Abtrennen des Unfiltratraumes (23) von einem Filtratraum (21) angebracht oder anbringbar ist, **dadurch gekennzeichnet, dass** durch die Spritzdüsen (35) ein Fluid aus einem Unfiltratraum (23) eines Anschwemmkerzenfilters (20) abziehbar ist.

16. Reinigungseinrichtung (30) nach Anspruch 15, **dadurch gekennzeichnet, dass** die Spritzdüse (35) ein Prallblech (37), zum gleichmässigen Verteilen eines einströmenden Reinigungsmittels im Unfiltratraum (23) aufweist.

17. Reinigungseinrichtung (30) nach Anspruch 15 oder 16, **dadurch gekennzeichnet, dass** die Spritzdüse (35) derart ausgestaltet ist, dass ein Strömungswiderstand in Richtung zum Unfiltratraum (23) grösser ist als ein Strömungswiderstand beim Abziehen eines Fluids aus dem Unfiltratraum (23).

18. Reinigungseinrichtung (30) nach Anspruch 17, **dadurch gekennzeichnet, dass** die Spritzdüse (35) in Richtung zum Unfiltratraum (23) ein Rückschlagventil aufweist, welches mittels mindestens einer Bypassöffnung (42) durchlässig ist.

19. Anschwemmkerzenfilter (20), insbesondere nach Anspruch 10 oder 11, mit einem Unfiltratraum (23), einem Filtratraum (21) und einer Trennwand (28), umfassend eine an der Trennwand (28) im Unfiltratraum (23) angeordnete Reinigungseinrichtung (30) nach einem der Ansprüche 15 bis 18.

20. Verfahren zum Phasenwechsel in einem Anschwemmkerzenfilters (20) mit Filterkerzen, insbesondere in einem Anschwemmkerzenfilter (20) nach Anspruch 10 oder 11, wobei in den Unfiltratraum (23) eine nächste Phase eingeleitet wird, **dadurch gekennzeichnet, dass** bis zum Erreichen einer vordefinierten Phasenkonzentration im Filtrat ein Teil der Phase durch die Filterkerzen (1) und ein Teil der Phase direkt aus dem Unfiltratraum (23) durch eine Reinigungseinrichtung (30), vorzugsweise nach einem der Ansprüche 15 bis 18, und/oder durch einen Entlüftungsanschluss (24) abgezogen wird.

21. Verfahren nach Anspruch 20, **dadurch gekennzeichnet, dass** zwischen 50% und 100%, vorzugsweise zwischen 65% und 95%, besonders bevorzugt zwischen 80% und 90% der Phase direkt aus dem Unfiltratraum (23) abgezogen wird.
